# EUROPEAN PATENT SPECIFICATION

(11) **EP 0 346 964 B1**
(45) Date of publication and mention of the grant of the patent: **06.10.1993**
(21) Application number: 89201413.5
(22) Date of filing: 05.06.1989
(51) Int. Cl.: C08F 220/04, C08F 222/02, C11D 3/37

(54) **A process for the obtainment of copolimers with sequestering and dispersing properties**
Verfahren zur Herstellung von Copolymeren mit komplexierenden und dispergierenden Eigenschaften
Procédé de préparation de copolymères avec des propriétés séquestrantes et dispersantes

(30) Priority: 15.06.1988 ES 8801858
(43) Date of publication of application: 20.12.1989
(73) Proprietor: LABORATORIOS MIRET, S.A. (LAMIRSA), (ES); COMPANIA ESPANOLA DE PETROLEOS S.A. -CEPSA, E-28002 Madrid (ES)
(72) Inventor: Berna Tejero, José Luis, Boadilla Del Monte (Madrid) (ES); Contijoch Mestres, Agusti, Barcelona (ES)
(74) Representative: Ungria Lopez, Javier

(56) References cited:
- EP-A- 0 075 820
- DC-A- 3 233 776

## Description

### 1. OBJECT OF THE INVENTION

The object of this invention is an industrial process for the obtainment of low molecular weight copolymers obtained by polymerization of mono and di-carboxylic acids with an ethylene bond in the molecule thereof and aliphatic esters of unsaturated monocarboxylic acids, as well as the salts of said copolymers soluble in an aqueous medium, and characterized by the use of a system of oxidation-reduction as polymerization initiators and a weighted simultaneous and sequential addition of all the monomers and catalysts.

The present invention refers to a process of obtainment of copolymers usable as components of detergents and cleaning agents in general, solids as well as liquids, and which are characterized by a special bonding capacity with alkaline earth metallic ions and especially with calcium and magnesium which gives them some noteworthy properties as dispersing and sequestrating agents of said ions and therefore particularly useful in washing formulations and in other uses in which those metallic ions can carry out precipitation, occlusion, clouding actions and in general, a reduction of yield of the physical or chemical operations.

Said salts soluble in an aqueous medium of the copolymers obtained according to the process of the present invention refer preferably to sodium, potassium or ammonium salts.

Likewise, the reference to the low molecular weight refers to that the average molecular mass is less than 200,000 and is preferably included between 50,000 and 150,000, low values in the case of polymerization products.

### 2. TECHNICAL-ECONOMIC JUSTIFICATION

As it is known the success of so-called synthetic detergents, in their industrial uses, and, above all, in domestic uses, has been based not only on the presence of surface active agents, but also on the so-called coadjuvants or builders.

These products are very numerous, with specific functions, but phosphates have been the ones which have stood out the most in any of the different forms which have been used, such as simple, tri and pyrophosphates and, in general, linear and cyclical structure polyphosphates. Phosphates have made it possible that the surface active molecules fully carry out their functions due to their sequestrating power of the ions responsible for the hardness of the water, as well as for their dispersing and suspending power of the dirt removed from textiles.

The concern caused in the United States (area of the Great Lakes) and in European countries and Japan with over-populated lacustrine or fluvial areas, upon verifying that the presence of relatively large amounts of phosphates in the water gave rise to noteworthy growth of algae and hence a high chemical and biochemical demand of oxygen, gave rise to an in-depth worldwide study to take steps to reduce this phosphorous content of sewage. The use of phosphates in the agricultural medium was difficult to contro and is, in turn, one of the bases of the ecologists' revolution. Therefore, the legislation of many countries chose to dictate measuring tending to eliminate or reduce the phosphate content of home detergents.

Technology has come to help the legislative action for the purpose of finding solutions to the total or partial elimination of polyphosphates. A powdered home detergent in Western Europe could respond to a composition of the following type:

| | | |
|---|---|---|
| Anionic and non-ionic surface active agents | Alkylbenzene sulfonate | |
| | Alkane-sulfonate | 10-15 % |
| | Alkyl-polyglycolether | |
| | Alkyl-sulfate | |
| Coadjuvants | Tripolyphosphate | 20-40 % |
| Bleach | Sodium perborate | 15-30 % |
| Whitening activator | Pentacetyl glucose, EDTA | yes/no |
| Antisettling agent | Carboxymethylcellulose | |
| | Cellulos ethers | O.5-2.0 % |
| Corrosion inhibitor | Sodium silicate | 3.0-6.0 % |
| Stabilizers | Magnesium silicate | |
| | Tetrasodium EDTA | 0.2-2.0 % |
| Antifoam | Paraffin silicone oil or special soaps | O.1-4.0 % |
| Scent | | 0.1-0.3 % |
| Enzymes | | yes/no |
| Optical bleach | | O.1-0.3 % |
| Fabric softener | | yes/no |
| Filler | Sodium sulfate | 5-20 % |

Likewise, a heavy duty liquid would respond to a percentage composition by weight of the type:

| | |
|---|---|
| LAS (linear alkyl sulfonate) | 5-15 % |
| N.I. (Non-ionic surface active agent) | |
| SOAP | 5-15 % |
| C.M.C. (Carboxymethylcellulose) | 0-1 % |
| KTPP (Potassium tripolyphosphate) | 10-30 % |
| Na₂CO₃ | O-10 % |
| H₂O | Balance |

In order to reduce or substitute the polyphosphates, several products have been proposed. Among them the ones that have become most popular are special detergent degree zeolites, in which the elimination of the hardness is done by ionic exchange instead of by sequestration. Thus zeolite 4 A, a special sodium silicoaluminate, began to be used in the United States in 1978. It has later been used in Japan and West Germany and finally in Switzerland, Italy, Austria, Holland Korea and Taiwan.

However, replacement has not been as easy as it was thought to be and, consequently, it has been necessary to add to the formulations products which complement the sequestrating action with other properties, such as improving the secondary detergent effect, ensuring the antiscale power of the formulation and prevent the material from turning gray.

Products with properties which can meet these requirements are the ones of the type of acrylic polymers and especially copolymers such as those that are the object of the process described in this patent. These copolymers must have the following as special properties:
- To be water soluble
- To have a high sequestrating power of calcium and magnesium ions
- To retain this capacity at high temperatures of those that are used in washing in hot water (50-90ºC)
- To have a high dispersing power to prevent materials from turning gray
Products of this type have been rather widely described in recent bibliography. Specifically they appear in patents like German Patent DE 3.340.164 (Camp, S.A.) in which a detergent formulation containing 1.5 parts by weight of a maleic acid-methacrylic acid copolymer is patented. Another example, is Japanese patent 59,06.298 (Lion Corp.) in which an anionic detergent formulation in which a mixture of Arquard 2HT and an acrylic acid-maleic anhydride copolymer, a mixture which gives softening and suspending power to the detergent is patented. Other manufacturers present patents of detergent in powder, pellet or liquid form, in which a maleic acid-acrylic acid copolymer with a 2 % by weight (Procter and Gamble Co., European Patent EP 124 913 enter as an auxiliary agent.

The invention is intended to overcome the drawbacks of the prior art by the preparation of copolymers having sequestering and dispersing properties. According to this process aqueous solutions are prepared from copolymers which have been obtained by polymerization in an aqueous medium at temperatures between 30-100º C and at a pH comprised between 2.5 and 3.5 of compounds comprising mono- and dicarboxylic acids having an ethylenic bond in their molecule and a maximum of 6 carbon atoms, aliphatic esters of unsaturated monocarboxylic acids having 1-3 carbon atoms, in which the aliphatic radicals have 1-2 carbon atoms, as well as its corresponding alkali salts.

The molar percentage of said aliphatic esters, referred to the total amount of monomer is 1-10 % and preferably 3-6 % whilst the molar percentage of said mono-carboxylic acids, referred to the total amount of monomers is 40-95 % and preferably 70-85 %. The molar percentage of said dicarboxylic acids, referred to the total amount of monomers is 5-50 % and preferably 10-30 %.

Possible polymerization catalysts are formed by salts of persulfuric acid, hydrogen peroxide, organic peroxides and bis-azo derivatives or combinations thereof, and preferably by oxidation-reduction pairs of these compounds with sodium metabisulfite, sodium bisulfite, ascorbic acid and iron salts. The sodium persulfate and/or hydrogen peroxide along with sodium bisulfite and/or ascorbic acid is an oxidising catalyst to reducer ratio comprised between 0.01-40 % by weight and preferably between 1-30 % is preferably used as a polymerization catalyst initiator. The ratio between the oxidizing catalyst and monomers is comprised between 1-10 % by weight.

The addition of monomers and catalysts to the aqueous reaction medium kept at a temperature between 30 and 90º C is sequentially programmed with periods of 15-60 minutes, preferably 30-45 minutes, the number of pauses or periods being programmed being included between 5 and 15 and preferably 8 and 12.

In each of the additions to the aqueous polymerization mediums the amounts of each of the monomers and catalysts are in sequential and graduated form and in a proportion comprised between 6 and 20 % by weight of the amounts of monomers to be used and preferably between 8 and 13 %. The pH of the reaction medium is kept constant during the polymerization process at values between 2.5 and 5.5, until the final neutralization process is started. Finally, the whole process is carried out at atmospheric pressure whereby no inert gas atmosphere is required.

### 3. Technical DESCRIPTION

The preparation of copolymers by polymerization by radicals as of the corresponding monomers is a known process, since even some of the processes have been included in general chemical works such as the "Encyclopedia of Chemical Technology" (Kirk-Othmer.) The normal ways used for said processes are those of "organic solvent" and "aqueous" way.

The "organic solvent" way (toluene, benzene, tert-butanol, iso-butylene) has the inconvenience of the need to remove the reaction medium in order to attain products which are fully soluble in water. Likewise, the inconveniences from the point of view of the equipment and of the precautions which have to be taken when inflammable solvents are worked with are also quite important.

Since it is technically possible, the "aqueous" way has been preferred for this. A sample of said technical possibility is Spanish patent 549.873 of the applicant LAMIRSA, which protects a process for the obtainment of aqueous solutions of polyacrylic acids, copolymers thereof and their corresponding salts.

However, in the type of polymerization which is related to this patent application, the polymerization of the unsaturated carboxylic derivatives (acrylic or methacrylic acid with maleic, fumaric, itaconic acid) has serious difficulties due to the different degree of reactionability of said monomers.

The claimed process overcomes these difficulties by means of a complex original system which comprises:
a) The use of relatively low concentrations of monomers, concentrations which can vary between 25 and 45 %.
b) A reaction temperature which can vary between 30 and 100º C.
c) Carrying out the process at atmospheric pressure and without an atmosphere of inert gas.
d) An addition technique of the products controlling the polymerization which controls the reproducibility of the parameters of molecular measurement of the obtained polymer, as well as the properties thereof. Said technique is based on the choice of some determined concentrations of the monomers reacting in each addition, the sequence of said addition, as well as the control and adjustment of the pH of the mass during the polymerization process in general and after each addition in particular.
e) The incorporation of small amounts of a third monomer formed by an aliphatic ester of an unsaturated monocarboxylic acid, which is a carboxylic acid with a chain of two to three carbon atoms esterified with an aliphatic derivative of 1 to 2 carbon atoms.
f) The selection and concentration of catalysts in each addition
   With regard to the processes of obtainment of "aqueous way" copolymers, by catalytic polymerization of unsaturated carboxylic derivatives and in particular to the catalysts used in the same the use of the persulfate/H₂O₂ system as a polymerization indicator of this type of copolymer has been described, before this one in the Japanese patent 140.986 (1976) of NIPPON SHOKUBAI KAGARU. Likewise, the use of (ammonium) persulfate exclusively as a polymerization catalyst of copolymers of this type is claimed in U.S. patent 3,635,915, and the use of H₂O₂ (hydrogen peroxide) as a polymerization initiator is described in the examples of EP 075 820 A1 (1983), though it is not expressly claimed.
   The oxidation-reduction pair system sodium persulfate/H₂O₂ and sodium bisulfite is described in this patent as a polymerization initiator makes it possible to overcome, together with the other parameters of the process claimed here, the difficulties that the polymerization of the unsaturated carboxylic derivatives used in this process by the different degree of reactionability of said monomers has. With regard to the process of adding monomers and catalysts, the usual process described in the majority of the patents that make up the prior art is based on putting in contact a solution totally or partially neutralized with alkaline hydroxide or monocarboxylic acid ammonium with a solution of dicarboxylic acid which contains the polymerization catalyst.

This "putting in contact" cited is a parameter which makes it possible to differentiate one process from another; thus in German patent DE 32 33 778 the putting in contact is carried out by means of the sequential addition of monocarboxylic acid, the non-carboxylic monomer and the catalyst on dicarboxylic acid, while in patents DE 3233776, DE 3138574 and DE 3147489 by means of the sequential addition of monocarboxylic acid and the catalyst on an aqueous solution of the dicarboxylic acid or the salts thereof. In Japanese patent 64613 (1984), the addition of the monocarboxylic acid is done drop by drop over an aqueous solution of dicarboxylic acid.

The gradual addition programmed sequentially with 30 to 45 minute periods for 4 or 5 hours of all the monomers and catalysts simultaneously and in suitable amounts characterizes the process described here which has noteworthy advantages as this process of addition attains along with other parameters of the process, a high degree of reaction, a reduction of times and an improvement of the quality of the products obtained.

The above cited aspects can be seen more concretely in the following examples.

### EXAMPLE 1

22 kg. of deionized water and 0.5 g. of ferrous sulfate 7H₂O are loaded in a reactor provided with reflux, stirring, heating element, cooling and temperature control and heated to 80º C. Then 3.34 kg. of acrylic acid, 0.24 kg. of maleic anhydride and 0.04 kg. of methyl acrylate dissolved in 3.1 kg. of deionized water and at a temperature of 50º C are then added. Then, 1.03 kg. of sodium hydroxide in flakes is then added to have the mixture at a pH of 4.3. After the complete dissolving thereof 0.40 kg. of hydrogen peroxide (100 volumes) dissolved in 0.60 kg. of deionized water are added. Then the polymerization reaction begins which is allowed for 30 minutes. After this time the same amounts of above cited monomers are added and the same content of sodium hydroxide in order to maintain the pH of 4.3 in the polymerization mediium. After the perfect dissolving thereof the catalyst solution is added.

These additions are repeated up to 8 times with said 30-minute intervals.

Once the addition process has ended the reaction mass is kept at reflux for 2 hours after which it is cooled and neutralized with 8.42 kg. of sodium hydroxide. 99.5 kg. of aqueous solution of polymer with a content of 40.1 kg. of a product characterized as an acrylic-maleic-methyl acrylate polymer with an intrinsic viscosity of O.12 are obtained.

### EXAMPLE 2

Following the same process as in example 1, with 22 kg. of deionized water and the same temperatures and catalysts, but the monomers ratio being the following:

| | |
|---|---|
| Acrylic acid | 21.81 kg. |
| Maleic anhydride | 5.56 kg. |
| Methyl acrylate | 1.63 kg. |
| Divided up in n° of additions | 8 |
| Time between each addition | 30 minutes |
| pH of the polymerization medium | 4.3 |

After the polymerization has been carried out and neutralized to a pH of 7.6 with NaOH, 98.2 kg. of an aqueous solution with a solid content of 40.1 kg. which is characterized as an acrylic-maleic-methyl polymer are obtained, with an intrinsic viscosity of : 0.15.

### EXAMPLE 3

Following the same process as in example nº 1, with 22 kg. of deionized water and the same temperatures and catalysts, but the monomers ration being the following:

| | |
|---|---|
| Acrylic acid | 24.21 kg. |
| Maleic anhydride | 3.79 kg. |
| Methyl acrylate | 1.00 kg. |
| Divided up in nº of additions | 8 |
| Time between each addition | 30 minutes |
| pH of the polymerization medium | 4.3 |

After the polymerization has been carried out and neutralized to a pH of 7.5 with NaOH, 98.9 kg. of an aqueous solution with a solid content of 40.6 %, characterized as an acrylic-maleate-methyl acrylate are obtained, with an intrinsic viscosity of O.11.

### EXAMPLE 4

In the same reactor as example nº 1, 22 kg. of deionized water are loaded and heated to 80º C. Then, 3.34 kg. of acrylic acid, 0.24 of maleic anhydride and 0.04 kg. of methyl acrylate dissolved in 3.1 kg. of deionized water and at a temperature of 50º C are added. Then 0.80 kg. of sodium hydroxide in pellets are added to obtain a polymerization pH of 3.3. The entire mass is heated to reflux and 40 grams of bis-azoisobutyronitrile dispersed in 50 g. of acetone.

It is left to react for half an hour. After this time, the addition of the monomers, sodium hydroxide and the catalyst is repeated in the same proportions 7 more times and keeping a 30-minute period between them. When the additions have ended 10 more grams of bis-azoisobutyronitrile in 20 grams of acetone are added and left at reflux for 2 hours.

After this time it is cooled and neutralized with 10.1 kg. of sodium hydroxide in flakes.

95.1 kg. of an aqueous solution of the polymer are obtained with a content of 42.5 kg. of an acrylic-maleic-methyl acrylate polymer are obtained, with an intrinsic viscosity of : O.O8.

### EXAMPLE 5

In the same reactor as example nº 1, 18 kg. of deionized water are loaded to which 0.5 g. of ferrous sulfate 7 H₂O are added and heated to 80º C. Then 3.09 kg. of acrylic acid, 0.3 kg. of methyl acrylate and 0.24 kg. of maleic anhydride dissolved in 3.0 kg. of deionized water and at a temperature of 60º C are added. Then, 0.8 kg. of NaOH are added to have the mixture at a pH of 3.9. After it has completely dissolved, a mixture made up of 0.13 kg. of sodium persulfate and 0.20 kg. of hydrogen peroxide (100 volumes), dissolved in 1.0 kg. of deionized water is added and then 8 grams of sodium metabisulfite in 25 grams of water. It is left reacting for half an hour. After this time, the additions are repeated a total of 8 times, just as has been described above and keeping the 30-minute interval between each one of them. Then, 0.05 kg. of hydrogen peroxide (100 v.) and 0.035 sodium persulfate dissolved in 0ï8 kg. of deionized water are added and left to boil for 1 hour. After this time, it is cooled and neutralized with 8.6 kg. of sodium hydroxide.

96.0kg. of an aqueous solution of the polymer are obtained with a content of 39.7 kg. of a product characterized as an acrylic-maleic-methyl acrylate polymer are obtained, with an intrinsic viscosity of 0.09.

### EXAMPLE 6

In the same reactor as example nº 1, 21 kg. of deionized water are loaded and heated to 60º C. Then, 2.73 kg. of acrylic acid, 0.70 og maleic anhydride, 0.20 kg. of methyl acrylate and 6 grams of ascorbic acid dissolved in 3.0 kg. of deionized water and at a temperature of 60º C are added. Then 1.03 kg. of sodium hydroxide in flakes are added to have the mixture at a pH of 4.3. After the same has completely dissolved, it is allowed to boil and 0.60 kg. of hydrogen peroxide diluted in 1.00 kg. of deionized water are added.

The polymerization reaction is maintained for 45 minutes, then the same operation of addition of the mixture of monomers and ascorbic acid, the addition of the neutralizing agent and the adding of the catalyst 7 more times with the above cited interval between additions is repeated.

Once the process has ended, it is kept at reflux for 1 more hour. After this time it is cooled and neutralized with 8.7 kg. of sodium hydroxide.

102.5 kg. of an aqueous solution of the polymer are obtained with a content of 39.6 kg. of a product characterized as an acrylic-maleic-methyl acrylate polymer are obtained with an intrinsic viscosity of : 0.12.

### EXAMPLE 7

In the same reactor as example nº 1, 20 kg. of deionized water are loaded and heated to 60º C. A mixture made up of 2.45 kg. of acrylic acid, 0.85 kg. of sodium hydroxide, 0.11 kg. of maleic anhydride and 2 kg. of deionized water is added at a temperature of 60º C. Then, 0.034 kg. of methyl acrylate dissolved in 0.5 kg. of deionized water and 6 grams of ascorbic acid are loaded. The resulting pH of the entire mixture is 4.2. It is heated to 80º C and 0.08 kg. of sodium persulfate and 0.28 kg. of hydrogen peroxide (100 volumes) dissolved in 0.8 kg. of deionized water are added. It is allowed to react for half an hour.

These additions are repeated 9 times more with an half-hour interval between each one of them.

After this time, 0.02 kg. of sodium persulfate and 0.06 kg. of hydrogen peroxide (100 volumes) dissolved in 0.2 kg. of deionized water are added and allowed to react for one more hour.

After this time, it is cooled and neutralized with 8.3 kg. of sodium hydroxide in flakes.

100.5 kg. of an aqueous solution of the polymer are obtained with a content of 39.8 kg. of a product characterized as an acrylic-maleic-methyl acrylate polymer are obtained with an intrinsic viscosity of 0.11.

### EXAMPLE 8

Just as has been indicated above, one of the properties most sought in the polymers synthesized in in accordance with the process which is claimed in the patent is the sequestrating power of the calcium and magnesium ions. This sequestrating power, for preference should be high at room temperature, as well as at a high temperature, since both thermal conditions are the usual ones in home clothes washing, depending on the type of fabric.

The method used for the evaluation of the sequestrating power of the polymer has as reference the occurrence of a fixed turbidity resulting from the addition on a solution of Na₂CO₃ of another of calcium acetate, thus producing the corresponding calcium carbonate. The sequestrating effectiveness of the polymer is determined by the larger or smaller amount of solution of calcium acetate, which should be added to reach the turbidity point.

### TEST

100 ml. of distilled water are poured in a flask. The grams of polymer corresponding to 1 gr. of active matter are added. It is put under magnetic stirring, 10 ml. of 2.2 % Na₂CO₃ in aqueous solution are added and the temperature is adjusted to 25º C (or to 80º C) and the pH to 11.5 with a 1.2 molar aqueous solution of NaOH, keeping the temperature and pH constant during the entire titration.

Then, it is titrated with a standard Ca solution (4.5 % monohydrate calcium acetate) or Mg (5.3 % tetrahydrated magnesium acetate) until the occurrence of a fixed turbidity.

The sequestrating power is calculated in mg. CaCO₃/active gram. This test is carried out at 25º C and at 80º C for each Ca and Mg cation. The results obtained with samples of the polymer obtained in examples 1 to 7 give the following sequestrating powers:

| VALUES OF THE SEQUESTRATION OF Ca²⁺ and Mg²⁺ SALTS | | | | | |
|---|---|---|---|---|---|
| EXAMPLE | I.V. | CALCIUM | | MAGNESIUM | |
| | | 25º C | 80º C | 25º C | 80º C |
| 1 | 0.12 | 550 | 530 | 380 | 120 |
| 2 | O.15 | 510 | 500 | 370 | 100 |
| 3 | O.11 | 600 | 590 | 350 | 110 |
| 4 | O.08 | 330 | 320 | 150 | 60 |
| 5 | 0.09 | 500 | 450 | 400 | 360 |
| 6 | 0.12 | 530 | 510 | 340 | 195 |
| 7 | 0.11 | 490 | 480 | 360 | 190 |

## Claims

1. A process for obtaining copolymers with sequestering and dispersing properties in aqueous solutions of the copolymers by polymerization in an aqueous medium at temperatures between 30 and 100º C and a pH between 2.5 and 5.5 of compounds comprising mono and dicarboxylic acids with an ethylenic bond in their molecule and having a maximum of 6 carbon atoms, aliphatic esters of ethylenically unsaturated monocarboxylic acids which are carboxylic acids with a chain of 2 or 3 carbon atoms and in which the aliphatic ester radial has 1-2 carbon atoms, as well as the corresponding salts thereof, and in which a system of oxidation-reduction pairs is used to initiate polymerization, and in which all monomers and catalysts are added simultaneously or sequentially, wherein the concentration of the monomers used is comprised between 25 and 45 % by weight, and wherein the products controlling polymerization are added in such a manner that concentration of the monomers reacting in each addition, the sequence of the additions as well as the adjustment and control of the pH of the mass during the polymerization process in general and after each addition in particular, the reproducibility of the molecular measurement parameters of the obtained polymer and the properties thereof, are controlled.

2. A process according to claim one characterized in that
a) the molar percentage of the aliphatic esters of the monocarboxylic acids with an ethylenic bond over the total of monomers is from 1 to 10 % and preferably from 3 to 6 %.
b) the molar percentage of the monocarboxylic acids with an ethylenic bond in the molecule thereof considered as a monomer with respect to the total of monomers is from 40 to 95 % and preferably from 70 to 85 %.
c) the molar percentage of the dicarboxylic acids with an ethylenic bond in the molecule thereof considered as a monomer with regard to the total of monomers is from 5 to 50 % and preferably from 10 to 30 %.

3. A process according to claim one characterized by the use of polymerization catalysts formed by salts of persulfuric acid, hydrogen peroxide, organic peroxides and bis-azo derivatives or combinations thereof and preferably by oxidation-reduction pairs of these compounds with sodium metabisulfite, sodium bisulfite, ascorbic acid and iron salts.

4. A process according to claim three characterized in that sodium persulfate and/or hydrogen peroxide along with sodium bisulfite and/or ascorbic acid in an oxidizing catalyst to reduce ratio included between 0.01 to 40 % by weight and, preferably from 1 to 30 % is preferably used as a polymerization catalyst-initiator.

5. A process according to claim three, characterized in that the ratio between the oxidizing catalyst and monomers is from 1 to 10 % by weight.

6. A process according to claim one, characterized in that the addition of monomers and catalysts to the aqueous reaction medium kept at a temperature between 30 and 90º C is sequentially programmed with periods of 15 to 60 minutes, preferably 30-45 minutes, this number of pauses or periods being included between 5 and 15 and preferably between 8 and 12.

7. A process according to claim one, characterized in that in each one of the additions to the aqueous polymerization medium the amounts of each and every one of the monomers and catalysts are in sequential and graduated form and in a proportion included between 6 and 20 % by weight of the amounts of monomers to be used and preferably between 8 and 13 %.

8. A process according to claim one, characterized in that the pH of the reaction medium is kept constant during the polymerization process between values of 2.5 and 5.5 until the beginning of the final neutralization process.

9. A process according to claim one, characterized in that the process is carried out at atmospheric pressure and without an atmosphere of inert gas.

## Patentansprüche

1. Verfahren zum Erhalten von Copolymeren mit Komplexbildungs- und Dispergierungseigenschaften in wässerigen Lösungen der Copolymere durch Polymerisation in einem wässerigen Medium bei Temperaturen zwischen 30 und 100° C und einem pH zwischen 2,5 und 5,5 von Verbindungen umfassend Mono- und Dicarbonsäuren mit einer ethylenischen Bindung in ihrem Molekül und mit einem Maximum von 6 Kohlenstoffatomen, aliphatische Ester von ethylenischen ungesättigten Monocarbonsäuren, die Carbonsäuren mit einer Kette von 2 oder 3 Kohlenstoffatomen sind und in denen der aliphatische Esterrest 1 bis 2 Kohlenstoffatome hat, ebenso wie die entsprechenden Salze davon, und in welchem ein System von Redoxpaaren verwendet wird, um die Polymerisation einzuleiten und in welchem alle Monomere und Katalysatoren gleichzeitig oder sequentiell zugegeben werden, worin die Konzentration der verwendeten Monomere zwischen 25 und 45 Gew.-% liegt und worin die Produkte, welche die Polymerisation kontrollieren, in einer solchen Weise zugegeben werden, daß die Konzentration der bei jeder Zugabe reagierenden Monomere, die Abfolge der Zugaben ebenso wie die Einstellung und Kontrolle des pH-Werts der Masse wahrend des Polymerisationsverfahrens im allgemeinen und nach jeder Zugabe im besonderen, die Reproduzierbarkeit der Parameter der molekularen Messung des erhaltenen Polymers und die Eigenschaften davon kontrolliert werden.

2. Verfahren nach Anspruch 1, **dadurch gekennzeichnet**, daß
a) der molare Prozentsatz der aliphatischen Ester der Monocarbonsäuren mit einer ethylenischen Bindung bezogen auf die gesamten Monomere 1 bis 10 % und vorzugsweise 3 bis 6 % beträgt.
b) der molare Prozentsatz der Monocarbonsäuren mit einer ethylenischen Bindung in ihrem Molekül, die als Monomer angesehen werden, bezogen auf die gesamten Monomere 40 bis 95 % und vorzugsweise 70 bis 85 % beträgt.
c) der molare Prozentsatz der Dicarbonsäuren mit einer ethylenischen Verbindung in ihrem Molekül, die als Monomer angesehen werden, bezogen auf die gesamten Monomere 5 bis 50 % und vorzugsweise 10 bis 30 % beträgt.

3. Verfahren nach Anspruch 1**, gekennzeichnet durch** die Verwendung von Polymerisations-Katalysatoren, die durch Salze von Perschwefelsäure, Wasserstoffperoxid, organische Peroxide und Bis-azo-Derivate oder Kombinationen davon und vorzugsweise durch Redoxpaare von diesen Verbindungen mit Natriummetabisulfit, Natriumbisulfit, Ascorbinsäure und Eisensalzen gebildet sind.

4. Verfahren nach Anspruch 3, **dadurch gekennzeichnet**, daß Natriumpersulfat und/oder Wassserstoffperoxid zusammen mit Natriumbisulfit und/oder Ascorbinsäure in einem oxidierender Katalysator- zu Reduktions-Verhältnis zwischen-0,01 bis 40 Gew.-% und vorzugsweise von 1 bis 30 Gew.-%, vorzugsweise als Polymerisations-Katalysator-Initiator verwendet wird.

5. Verfahren nach Anspruch 3, **dadurch gekennzeichnet**, daß das Verhältnis zwischen dem oxidierenden Katalysator und den Monomeren 1 bis 10 Gew.-% beträgt.

6. Verfahren nach Anspruch 1, **dadurch gekennzeichnet**, daß die Zugabe der Monomere und Katalysatoren zu dem wässerigen Reaktionsmedium, welches auf einer Temperatur zwischen 30 und 90° C gehalten wird, sequentiell mit Zeiträumen von 15 bis 60 Minuten, vorzugsweise 30 bis 45 Minuten programmiert ist, wobei diese Anzahl von Pausen oder Zeiträumen zwischen 5 und 15 und vorzugsweise zwischen 8 und 12 eingeschlossen ist.

7. Verfahren nach Anspruch 1, **dadurch gekennzeichnet**, daß bei jeder der Zugaben zu dem wässerigen Polymerisationsmedium die Mengen eines jeden der Monomere und Katalysatoren in sequentieller und abgestufter Form sind und in einem Verhältnis, das zwischen 6 und 20 Gew.-% der Mengen der zu verwendenden Monomere und vorzugsweise zwischen 8 und 13 % eingeschlossen ist.

8. Verfahren nach Anspruch 1, **dadurch gekennzeichnet**, daß der pH des Reaktionsmediums während des Polymerisationsverfahrens zwischen Werten von 2,5 und 5,5 bis zum Beginn des letztendlichen Neutralisationsverfahrens konstant gehalten wird.

9. Verfahren nach Anspruch 1, **dadurch gekennzeichnet**, daß das Verfahren bei atmosphärischem Druck und ohne Inertgasatmosphäre durchgeführt wird.

## Revendications

1. Procédé d'obtention de copolymères ayant des propriétés de séquestration et de dispersion, dans des solutions aqueuses de copolymères par polymérisation en milieu aqueux à des températures comprises entre 30 et 100°C et à un pH compris entre 2,5 et 5,5 de composés comprenant des acides mono- et dicarboxyliques contenant une liaison éthylénique dans leur molécule et comportant au maximum 6 atomes de carbone, d'esters aliphatiques d'acides monocarboxyliques éthyléniquement insaturés qui sont des acides carboxyliques en C₂-C₃ et dans lesquels le radical ester aliphatique est en C₁-C₂, ainsi que les sels correspondants de ceux-ci, et dans lequel on utilise un système de couples d'oxydoréduction pour initier la polymérisation et dans lequel tous les monomères et catalyseurs sont ajoutés simultanément ou de façon séquentielle, dans lequel la concentration des monomères utilisés est comprise entre 25 et 45 % en poids, et dans lequel les produits de contrôle de la polymérisation sont ajoutés d'une façon telle qu'on contrôle la concentration des monomères réagissant au cours de chaque addition, la séquence d'additions ainsi que l'adjustement et la surveillance du pH de la masse pendant un procédé de polymérisation en général et en particulier, après chaque addition, la reproductibilité des paramètres de mesure moléculaire du polymère obtenu et les propriétés de celui-ci.

2. Procédé selon la revendication 1, caractérisé en ce que :
a) le pourcentage molaire des esters aliphatiques des acides monocarboxyliques comportant une liaison éthylénique est compris entre 1 et 10 % et, de préférence, entre 3 et 6 %, par rapport au total des monomères,
b) le pourcentage molaire des acides monocarboxyliques comportant une liaison éthylénique dans leur molécule considérés comme des monomères est de 40 à 95 % et, de préférence, 70 à 85 %, par rapport au total des monomères,
c) le pourcentage molaire des acides dicarboxyliques ayant une liaison éthylénique dans leur molécule considérés comme des monomères vaut de 5 à 50 % et, de préférence de 10 à 30 %, par rapport au total des monomères.

3. Procédé selon la revendication 1, caractérisé par l'utilisation de catalyseurs de polymérisation formés par des sels d'acides persulfuriques, du peroxyde d'hydrogène, des peroxydes organiques et des dérivés bis-azoïques ou des combinaisons de ceux-ci et, de préférence, par des couples d'oxydoréduction de ces composés avec du metabisulfite de sodium, du bisulfite de sodium, de l'acide ascorbique et sels de fer.

4. Procédé selon la revendication 3, caractérisé eu ce qu'on utilise de préférence en tant que catalyseur-initiateur de polymérisation du persulfate de sodium et/ou du peroxyde d'hydrogène ainsi que du bisulfite de sodium et/ou de l'acide ascorbique dans un catalyseur d'oxydation pour diminuer le rapport à une valeur comprise entre 0,01 et 40 % en poids et, de préférence, 1 et 30 % en poids.

5. Procédé selon la revendication 3, caractérisé en ce que le rapport entre le catalyseur d'oxydation et les monomères est de 1 à 10 % en poids.

6. Procédé selon la revendication 1, caractérisé en ce que l'addition de monomères et de catalyseurs au milieu réactionnel aqueux maintenu à une temperature comprise entre 30 et 90°C est programmée de façon séquentielle avec des périodes comprises entre 15 et 60 min, de préférence 30 et 45 min, le nombre de pauses ou périodes étant compris entre 5 et 15 et, de préférence, entre 8 et 12.

7. Procédé selon la revendication 1, caractérisé en ce que, dans chacune des additions au milieu de polymérisation aqueux, les quantités de chacun des monomères et catalyseurs sont sous forme séquentielle et progressive et dans une proportion comprise entre 6 et 20 % en poids des quantités de monomères à utiliser et, de préférence, entre 8 et 13 %.

8. Procédé selon la revendication 1, caractérisé en ce que le pH du milieu réactionnel est maintenu constant entre 2,5 et 5,5 pendant le procédé de polymérisation jusqu'au procédé de neutralisation final.

9. Procédé selon revendication 1, caractérisé en ce que le procédé est mis en oeuvre à pression atmosphérique et sans la présence d'une atmosphère d'un gaz inerte.
